# EUROPÄISCHE PATENTSCHRIFT

(11) **EP 1 000 804 B1**
(45) Veröffentlichungstag und Bekanntmachung des Hinweises auf die Patenterteilung: **13.04.2005**
(21) Anmeldenummer: 99121837.1
(22) Anmeldetag: 04.11.1999
(51) Int. Cl.: B60Q 1/04

(54) **Scheinwerfer für Fahrzeuge**
Vehicle headlamp
Phare de véhicule

(30) Priorität: 09.11.1998 DE 19851488
(43) Veröffentlichungstag der Anmeldung: 17.05.2000
(73) Patentinhaber: Hella KGaA Hueck & Co., 59552 Lippstadt (DE)
(72) Erfinder: Henneböhl, Hans-Dieter, 59597 Bad Westernkotten (DE); Jackenkroll, Horst, 59077 Hamm (DE)

(56) Entgegenhaltungen:
- EP-A- 0 539 785
- DE-C- 3 602 295
- DE-C- 4 011 643
- FR-A- 2 727 479
- FR-A- 2 746 729

## Beschreibung

Die Erfindung betrifft einen Scheinwerfer für Fahrzeuge nach dem Oberbegriff des Patentanspruchs 1.

Aus der DE 40 11 643 C1 ist ein gattungemäßer Scheinwerfer bzw. eine Leuchte für Fahrzeuge bekannt, der mit Hilfe von Tragelementen an einem Karosserieteil befestigt wird. Um den Scheinwerfer genau gegenüber dem Karosserieteil positionieren zu können, weisen die Tragelemente Befestigungsöffnungen auf, in die zur Montage Distanzstücke mit einem seitlichen Spiel eingesetzt werden. Die Distanzstücke weisen Langlöcher auf, so daß sie gegenüber eingesteckten Befestigungsschrauben in Längsrichtung ihrer Langlöcher verschiebbar sind. Die Distanzstücke sind topfförmig ausgebildet und weisen an ihrem dem Karosserieteil abgewandten Ende einen Auflagerand mit zahnartigen Vorsprüngen auf. Die zahnartigen Vorsprünge sind quer zur Montagerichtung bzw. quer zu einer Längsachse der Distanzstücke bzw. der Befestigungsöffnungen angeordnet. Nach Ausrichten des Scheinwerfers gegenüber dem Karosserieteil und Anziehen der Befestigungsschrauben drücken sich die zahnartigen Vorsprünge seitlich in die die Befestigungsöffnungen umgebenden Wandungen der Tragelemente ein.

Nachteilig bei dem bekannten Scheinwerfer ist, dass während der Montage die Distanzstücke in die Befestigungsöffnungen der Tragelemente eingesetzt und justiert werden müssen. Dadurch gestaltet sich die Montage der Scheinwerfer relativ aufwendig, kompliziert und teuer.

Aus der DE 36 02 295 A1 ist ein Verbindungselement für Kunststoffteile bekannt, das als Distanzstück zwischen den zu verbindenden Teilen angeordnet ist und mit zahnartigen Vorsprüngen in eines der zu verbindenden Teile eindrückbar ist. Zur Verbindung der Teile ist auf einer gegenüberliegenden Seite des Distanzstückes eine Unterlegscheibe vorgesehen.

Aus der EP 0 539 785 A2 ist zur Verbindung eines Scheinwerfergehäuses an einem Karosserieteil ein u-förmiger Blechstreifen vorgesehen, dessen einer Schenkel als eine Unterlegscheibe dient. Zahnartige Vorsprünge weist der bekannte Blechstreifen nicht auf.

Aufgabe der vorliegenden Erfindung ist es daher, den bekannten Scheinwerfer so zu verbessern, dass die Befestigung des Scheinwerfers an dem Karosserieteil vereinfacht und kostengünstiger wird.

Diese Aufgabe wird durch die Merkmale des Patentanspruches 1 gelöst.

Dadurch, dass die zahnartigen Vorsprünge senkrecht zu der Unterseite des Auflagerands angeordnet sind, ist es möglich, die Distanzstücke bereits vor Befestigung des Scheinwerfers an dem Karosserieteil positionsgenau an den Tragelementen zu fixieren. Dadurch wird die kostenintensive Befestigung des Scheinwerfers am Karosserieteil wesentlich vereinfacht und kostengünstiger gestaltet. Schließlich weist der Scheinwerfer bereits die Distanzstücke auf, die während der Befestigung des Scheinwerfers nicht mehr montiert und justiert werden müssen.

Gemäß einer bevorzugten Ausführungsform der Erfindung, sind die zahnartigen Vorsprünge als abgewinkelte Einschnitte des Auflagerandes ausgebildet und weisen an ihrem der Unterseite abgewandten freien Ende eine scharfkantige Spitze auf.

Durch die Ausbildung der Vorsprünge als abgewinkelte Einschnitte ist ein kostengünstiges Herstellungsverfahren der Distanzstücke möglich. Der Auflagerand des Distanzstücke muss lediglich eingeschnitten und abgewinkelt werden. Dadurch, dass die zahnartigen Vorsprünge an ihrem freien Ende eine scharfkantige Spitze aufweisen, können die Distanzstücke relativ leicht in die Auflageflächen der Tragelemente eingedrückt werden.

Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:

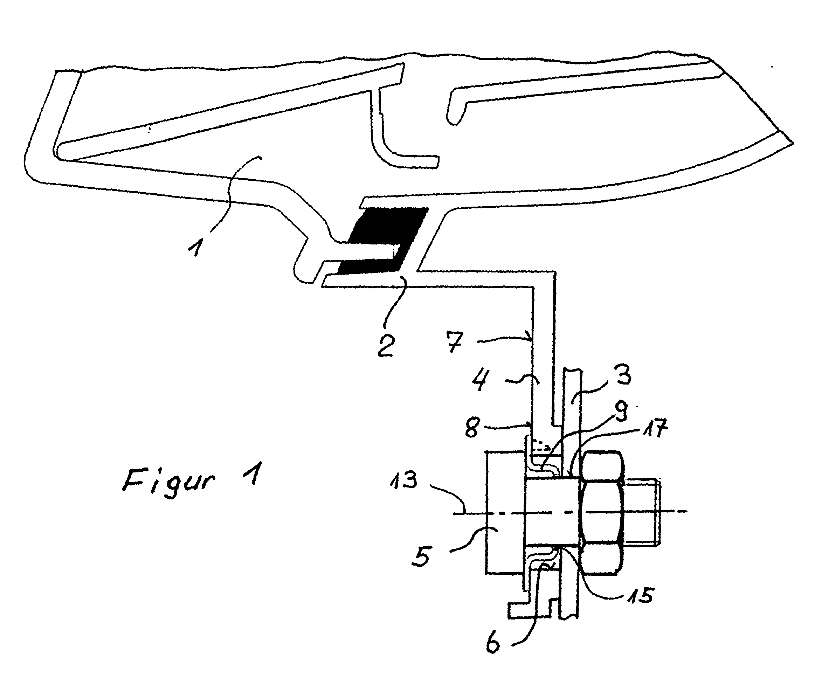

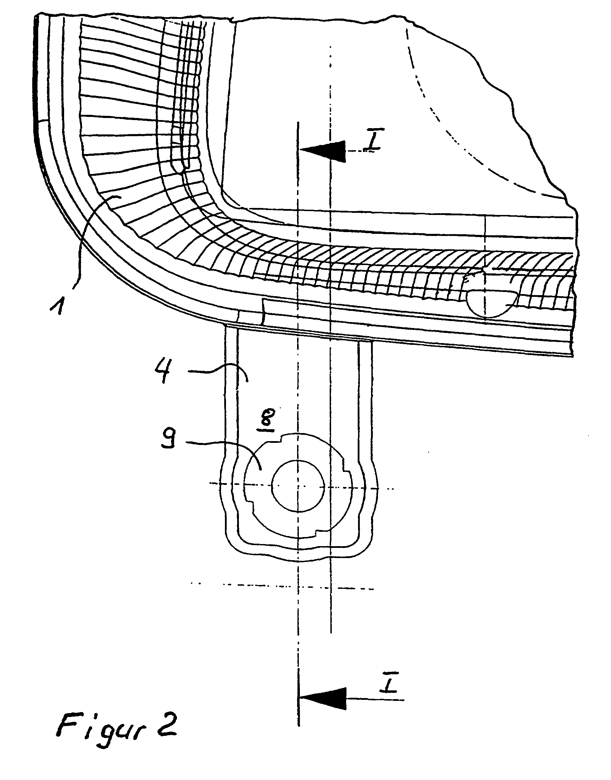

- Figur 1:: Eine Seitenansicht eines an einem Karosserieteil befestigten Scheinwerfers im Ausriss entlang der Linie l- I von Figur 2 geschnitten,
- Figur 2:: eine Vorderansicht eines Scheinwerfers für Fahrzeuge mit einem Trageelement und eingesetztem Distanzstück im Ausriss,

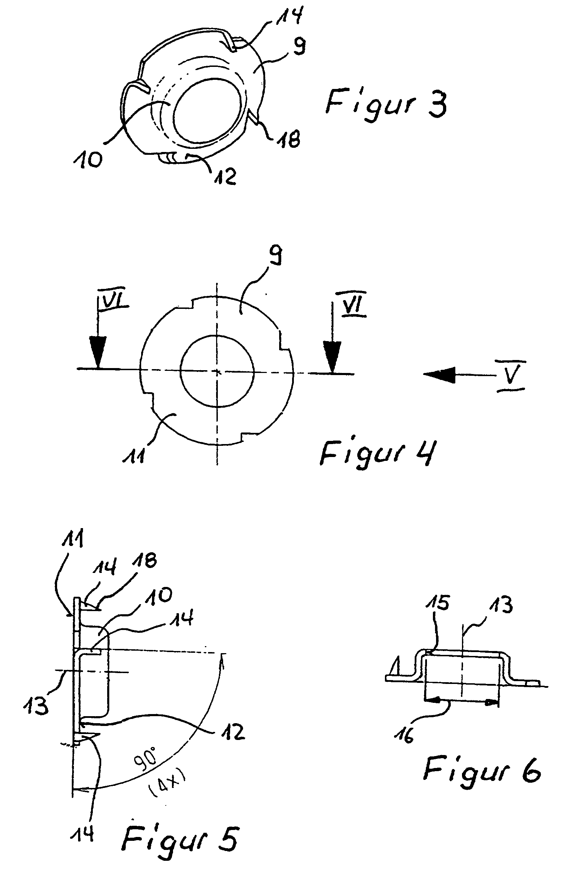

- Figur 3:: eine räumliche Darstellung eines Distanzstückes,
- Figur 4:: eine Vorderansicht des Distanzstückes von Figur 3,
- Figur 5:: eine Seitenansicht des Distanzstückes von Figur 4 aus Richtung V und
- Figur 6:: eine Seitenansicht des Distanzstückes von Figur 4 entlang der Linie VI-VI geschnitten.

Ein Scheinwerfer 1 für Fahrzeuge besteht im Wesentlichen aus einem Gehäuse 2, das an einem Karosserieteil 3 zu befestigen ist.

Das Gehäuse 2 weist mehrere, beispielsweise drei Tragelemente 4 auf, über die es mit dem Karosserieteil 3 über Schraubelemente 5 verschraubt wird.

Die Tragelemente 4 weisen eine Befestigungsöffnung 6 auf. Auf ihrer dem Karosserieteil 3 abgewandten Vorderseite 7 weisen die Tragelemente 4 eine Auflagefläche 8 auf.

In die Befestigungsöffnung 6 ist von der Vorderseite 7 her zum Toleranzenausgleich ein Distanzstück 9 mit einem topfförmigen Ansatz 10 einsetzbar. Der Ansatz 10 weist an seinem dem Karosserieteil 3 abgewandten Ende einen Auflagerand 11 auf. Der Auflagefläche 8 benachbart weist der Auflagerand 11 eine Unterseite 12 auf, die sich quer zu einer Längsachse 13 des Distanzstückes 9 erstreckt. Der Auflagerand 11 weist an seiner Unterseite 12 vier zahnartige Vorsprünge 14 auf. Die Vorsprünge 14 sind senkrecht zu der Unterseite 12, d. h. parallel zur Längsachse 13 angeordnet und weisen an ihren freien Enden scharfkantige Spitzen 18 auf. Die zahnartigen Vorsprünge 14 werden durch Einschneiden des Auflagerandes 11 und durch Abbiegen in Richtung Karosserieteil 3 hergestellt.

Der Ansatz 10 weist konzentrisch zur Längsachse 13 eine Durchgangsbohrung 15 auf, deren Durchmesser 16 auf das Schraubelement 5 abgestimmt ist. Der Durchgangsbohrung 15 benachbart weist das Karosserieteil 3 eine entsprechende Bohrung 17 auf.

Mit Hilfe einer nicht dargestellten Positioniervorrichtung wird das Distanzstück 9 positionsgenau auf das Tragelement 4 aufgesetzt und in Richtung der Längsachse 13 mit seiner Unterseite 12 gegen die Auflagefläche 8 des Tragelementes 4 gedrückt. Dabei werden die zahnartigen Vorsprünge 14 in das Material des Tragelementes 4 eingedrückt und so fixiert, dass die Unterseite 12 des Auflagerandes 11 gegen die Auflagefläche 8 des Tragelementes 4 anschlägt.

Zur Montage des Scheinwerfers 1 wird das Gehäuse 2 mit den fixierten Distanzstücken 9 so auf das Karosserieteil 3 aufgesetzt, dass die Durchgangsbohrungen 15 der Distanzstücke 9 und die entsprechenden Bohrungen 17 des Karosserieteiles 3 deckungsgleich sind. Anschließend wird der Scheinwerfer 1 bzw. die Tragelemente 4 nach Einsetzen der Schraubelemente 5 mit dem Karosserieteil 3 verschraubt.

## Patentansprüche

1. Scheinwerfer für Fahrzeuge mit Tragelementen (4) zur Befestigung an einem Karosserieteil (3), bei dem die Tragelemente (4) Befestigungsöffnungen (6) aufweisen, in die zur positionsgenauen Befestigung topfförmige Distanzstücke (9) einbringbar sind, die an einem dem Karosserieteil (3) abgewandten Ende einen Auflagerand (11) mit einer Mehrzahl von zahnartigen Vorsprüngen (14) aufweisen, wobei das Tragelement (4) auf einer dem Karosserieteil (3) abgewandten Vorderseite (7) eine Auflagefläche (8) aufweist, **dadurch gekennzeichnet, dass** die zahnartigen Vorsprünge (14) etwa senkrecht zu der Auflagefläche (8) des Tragelementes (4) zugewandten Unterseite (12) des Auflagerands (11) angeordnet und in die Auflagefläche (8) so eindrückbar sind, dass Unterseite (12) und Auflagefläche (8) in einer fixierten Position aneinander anliegen.

2. Scheinwerfer nach Anspruch 1, **dadurch gekennzeichnet, dass** die zahnartigen Vorsprünge (14) als abgewinkelte Einschnitte des Auflagerandes (11) ausgebildet sind.

3. Scheinwerfer nach Anspruch 1 oder 2, **dadurch gekennzeichnet, dass** die Distanzstücke (9) jeweils vier zahnartige Vorsprünge (14) aufweisen.

4. Scheinwerfer nach einem der Ansprüche 1 bis 3, **dadurch gekennzeichnet, dass** die zahnartigen Vorsprünge (14) an ihren der Unterseite (12) abgewandten freien Ende eine scharfkantige Spitze aufweisen.

5. Scheinwerfer nach einem der Ansprüche 1 bis 4, **dadurch gekennzeichnet, dass** die topfförmigen Distanzstücke (9) mit großem Spiel in den Befestigungsöffnungen (6) angeordnet sind.

## Claims

1. A headlamp for vehicles, comprising supporting elements (4) for fixing to a body part (3), in which the supporting elements (4) comprise fixing apertures (6) into which cap-shaped distance pieces (9) can be introduced for positionally accurate fixing, which distance pieces comprise, at their end remote from the body part (3), a supporting edge (11) with a multiplicity of tooth-like projections (14), wherein on a front face (7) remote from the body part (3) the supporting element (4) comprises a supporting face (8), **characterised in that** the tooth-like projections (14) are disposed approximately perpendicularly to the underside (12) of the supporting edge (11) facing the supporting face (8) of the supporting element (4) and can be pushed into the supporting face (8) so that the underside (12) and the supporting face (8) are seated in a fixed position against each other.

2. A headlamp according to claim 1, **characterised in that** the tooth-like projections (14) are formed as angled incisions in the supporting edge (11).

3. A headlamp according to claim 1 or 2, **characterised in that** the distance pieces (9) each comprise four tooth-like projections (14).

4. A headlamp according to anyone of claims 1 to 3, **characterised in that** at their free end remote from the underside (12) the tooth-like projections (14) comprise a sharp-edged tip.

5. A headlamp according to any one of claims 1 to 4, **characterised in that** the cap-shaped distance pieces (9) are disposed with a large clearance in the fixing apertures (6).

## Revendications

1. Phare pour véhicules comprenant des éléments porteurs (4) pour la fixation à une partie de carrosserie (3), dans lequel les éléments porteurs (4) comportent des ouvertures de fixation (6) dans lesquelles des pièces intercalaires (9) en forme de pot peuvent être introduites pour la fixation en position exacte, pièces intercalaires qui comportent à une extrémité détournée de la partie de carrosserie (3) un bord d'appui (11) avec une pluralité de saillies (14) en forme de dents, l'élément porteur (4) comportant sur son côté antérieur (7) détourné de la partie de carrosserie (3) une surface d'appui (8), **caractérisé en ce que** les saillies (14) en forme de dents sont agencées à peu près perpendiculairement au côté inférieur (12) du bord d'appui (11), côté inférieur tourné vers la surface d'appui (8) de l'élément porteur (4), et **en ce qu'**elles peuvent être enfoncées dans la surface d'appui (8) de telle sorte que le côté inférieur (12) et la surface d'appui (8) sont appliqués l'un contre l'autre dans une position fixe.

2. Phare selon la revendication 1, **caractérisé en ce que** les saillies (14) en forme de dents sont réalisées sous forme d'entailles coudées du bord d'appui (11).

3. Phare selon l'une ou l'autre des revendications 1 et 2, **caractérisé en ce que** les pièces intercalaires (9) comportent respectivement quatre saillies (14) en forme de dents.

4. Phare selon l'un des revendications 1 à 3, **caractérisé en ce que** les saillies (14) en forme de dents comportent à leur extrémité libre détournée du côté inférieur (12) une pointe à arêtes vives.

5. Phare selon l'une des revendications 1 à 4, **caractérisé en ce que** les pièces intercalaires (9) en forme de pot sont agencées dans les ouvertures de fixation (6) avec un jeu important.
